# EUROPEAN PATENT APPLICATION

(11) **EP 3 156 960 A1**
(43) Date of publication of application: **19.04.2017**
(21) Application number: 15189663.6
(22) Date of filing: 13.10.2015
(51) Int. Cl.: G06Q 30/02

(54) **METHOD TO DETERMINE WILLINGNESS-TO-PAY**

(71) Applicant: Müller, Kai-Markus, 71546 Aspach (DE); Baldo, Davide, 71546 Aspach (DE)
(72) Inventor: Müller, Kai-Markus, 71546 Aspach (DE); Baldo, Davide, 71546 Aspach (DE)
(74) Representative: Meyer zu Bexten, Elmar

(57) **Abstract**

**Problem**

Traditional approaches to measure consumers' WTP involve the use of questionnaires or methods based on choice modelling techniques. However, these state-of-the-art methods rely heavily on a subject's capability of introspection and verbalization of her sensations. Experimental psychology shows that, particularly when applied to market research, the aforementioned competencies are widely overestimated.

**Solution**

Method (10) of measuring the willingness of a subject (12) to pay for a given commodity or service (14),
characterized in
successively presenting the subject (12) with various hypothetical prices (16) of the commodity or service (14),
upon presenting each price (16), recording the time-locked brain response elicited in the subject (12) by the price (16), and
inferring from the price-induced time-locked brain responses the willingness-to-pay (18) and a prediction of the demand curve.

## Description

### Technical Field

The invention pertains to a method for determining consumers' willingness-to-pay and predict the demand curve for a given commodity or service.

### Background Art

In neuroscience and cognitive psychology, the quantitative investigation of the relationship between physical stimuli and the sensations and perceptions they elicit is commonly referred to a psychophysics. As laid out in MULLER, Kai-Markus. NeuroPricing: Wie Kunden über Preise denken. Freiburg: Haufe-Lexware, 2012. ISBN 3648030256. p.27-64. , the application of neuroscience and psychophysics to the field of marketing research has led to a novel field of marketing research collectively referred to as Neuromarketing. Goal of Neuromarketing is to measure how the brain reacts to marketing stimuli and to use such measurements to investigate the process of customer decision making and predict the effectiveness of marketing material. Known techniques employed throughout this field include the use of functional magnetic resonance imaging (fMRI), electroencephalography (EEG) to measure changes in brain activity, and sensors to measure changes in physiological state, also known as biometrics. These and other tools are elucidated in MULLER, Kai-Markus. Product pricing using novel tools from neuroscience. The Pricing Advisor. 2010, vol.11, p.1-4. Neuromarketing techniques were implemented to investigate the customer decision making process at a deeper level as compared to what classic marketing does. In fact, classic marketing research implements questionnaire-based methods to investigate customer's perception. This means that such methods require participants of a marketing research to explicitly state what they think or how they feel about a specific advertisement, product, price and so on. On the other hand, Neuromarketing uses neuroscientific methods to measure directly from brain activity how the tested material is perceived without requiring participants to explicitly state what they think of how they feel about it. Regarding pricing research, a number of questionnaire-based techniques were developed to determine how much customers are willing to pay for a specific product, like the "Gabor-granger" method and "Van Westendorp's Price Sensitivity Meter". On the other hand, the method presented here measures how the brain reacts to a number of different prices and uses such brain reactions to determine customer's willingness-to-pay and predict the demand curve.

EP 2130146 A (NEUROFOCUS INC) 09.12.2009 discloses a system of measuring and analyzing a subject's central nervous system, autonomic nervous system, and effector data to determine the effectiveness of marketing and entertainment stimuli.

### Summary of invention

The invention aims to provide a method for determining the willingness-to-pay of both individual customers and groups and to predict the demand curve (which is the demand for a product as a function of its price), using electroencephalographic brain scans. Hereinafter, the term "willingness-to-pay" (WTP) is used in its microeconomic sense, meaning the maximum amount an individual is willing to sacrifice to procure a good or avoid something undesirable.

### Technical Problem

Traditional approaches to measure consumers' WTP involve the use of questionnaires or methods based on choice modelling techniques. However, these state-of-the-art methods rely heavily on a subject's capability of introspection and verbalization of her sensations as well as capability to predict her future behavior. Experimental psychology repeatedly shown that, particularly when applied to market research, the aforementioned competencies are widely overestimated.

### Solution to Problem

This problem is solved by a method according to Claim 1.

### Advantageous effect of invention

The invention is based on the insight that human decisions are mainly driven by unconscious processes. Hence, the proposed method encompasses the quantification of brain activity to establish perceived value and willingness-to-pay of a given item. Availability of such information ahead of launching an envisaged product, or when it comes to optimize the price of an existing product, allows its producers to maximize their profits by optimizing prices and price architectures.

### Brief description of drawings

Figure 1 illustrates an experimental paradigm according to an embodiment of the invention.
Figure 2 shows the layout of a laboratory developed to perform a method according to the invention.

### Description of embodiments

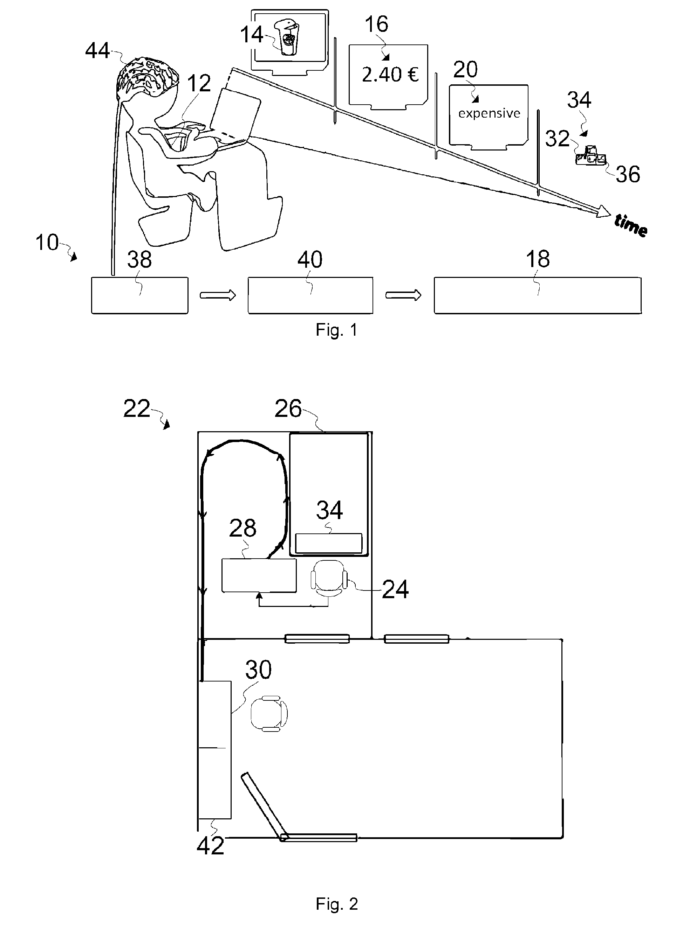

Figure 1 elucidates the experimental paradigm underlying the proposed method 10 of measuring the willingness of a subject 12 to pay for a given commodity or service 14. In this embodiment, each of multiple subjects which take part in the test, upon being instructed on the designated procedure and informed of its safety, is led to a laboratory 22 such as the one depicted in Figure 2. Here, the subject 12 is seated on a comfortable chair 24 while being fitted with the head cap 44 of a multichannel electroencephalograph set up by a trained operator (not depicted).

Throughout the procedure to follow, the subject 12 is first presented with the commodity or service 14 in question. For instance, in the embodiment at hand, an image of the commodity or service 14 is displayed every minute for several seconds on a screen 26 in front of the seated subject 12. Using the same screen, the subject 12 is presented with a hypothetical price 16 of the commodity or service 14, inevitably eliciting a time-locked brain response in the subject 12. A time-locked brain response is a brain response following the presentation of a stimulus. Such response is recorded by the EEG in form of an electrical activity. To determine the stimulus-related brain response, which is the response relating to the stimulus only, and not to other ongoing brain activity, the stimulus is presented to the participant several times and the recorded time-locked responses (to the same stimulus) are then averaged together in order to reduce noise (electrical activity not related to the presented stimulus). In order to determine willingness-to-pay, the time-locked brain response to each of the tested price is computed. To that end, the participant's brain activity is recorded with a state-of-the-art electroencephalogram from 0.5 seconds before each price appears on screen up to 1 second after the price is shown. Due to the low amplitude of the voltages caused by the brain activity, it is crucial to use a high-end EEG hardware which records such activity without adding relevant noise to the recorded data. The participant brain activity is first amplified 28 and then sent to a laptop where data are visualized and stored 30. Each price is presented on screen for 1 second. Afterwards, the participant is presented with either the word "cheap" or "expensive" 20. This elicits a second time-locked response which is recorded in the same fashion. At this point, the subject 12 is prompted for approval - expressed by pressing the left arrow 32 key on a keyboard 34 provided for this purpose - or disapproval - expressed through the corresponding right arrow key 36. The "reaction time", which is the time elapsed between the presentation of the word and the instant in which the subject answers is also recorded (see Figure 1 for the experimental design). This procedure is repeated over and over in a random sequence wherein each price 16 is presented several times. Once the EEG measurement 38 is finished, subsequent data analysis 40 is conducted to determine the average time-locked brain response to each price and to each word ("cheap" and "expensive"). This procedure results in three time-locked brain responses for each price: one response to the price itself, one to the word "cheap" and "expensive" which appears after the price is presented. To determine the time-locked brain response to prices and words, the recorded brain data is digitally filtered both high- and low-pass in order to reduce noise. As each price is presented several times, all the time-locked brain responses to the same price are averaged together to determine the brain response to each price. There is one brain response for each EEG channel (recording location). By analyzing these time-locked responses in a time window from zero to one second after the price is presented and combining them with the analysis of the reaction times 41, the presented method determines to what extent each tested price fits with the product ("feel-good-price" or willingness-to-pay curve). Also, the proposed method further models a prediction of the demand curve by processing the willingness-to-pay curve. The demand curve represents customers' buying behaviors in the marketplace at different prices.

### Industrial applicability

The invention is applicable, inter alia, in a variety of different industries: Pharmaceutical, Banking, Tourism, Automotive, or FMCG. Also, it can be applied to both B2B and B2C contexts.

### Reference signs list

The following reference signs are used consistently throughout the attached drawings.

| | |
|---|---|
| Method | 10 |
| Subject | 12 |
| Commodity or service | 14 |
| Price | 16 |
| Willingness-to-pay | 18 |
| Rating | 20 |
| Laboratory | 22 |
| Chair | 24 |
| Screen | 26 |
| Amplifier | 28 |
| Recording laptop | 30 |
| Left arrow key | 32 |
| Keyboard | 34 |
| Right arrow key | 36 |
| EEG measurement | 38 |
| Data analysis | 40 |
| Data interpretation | 41 |
| Presentation laptop | 42 |
| Head cap | 44 |

Similar reference signs denote corresponding features.

### Citation list

The following literature is cited throughout this document.

### Patent literature

EP 2130146 A (NEUROFOCUS INC) 09.12.2009

### Non-patent literature

MULLER, Kai-Markus. NeuroPricing: Wie Kunden über Preise denken. Freiburg: Haufe-Lexware, 2012. ISBN 3648030256. p.27-64.

MULLER, Kai-Markus. Product pricing using novel tools from neuroscience. The Pricing Advisor. 2010, vol.11, p.1-4.

## Claims

1. Method (10) of determining the willingness of a subject (12) to pay for a given commodity or service (14),
**characterized in**
successively presenting the subject (12) with various hypothetical prices (16) of the commodity or service (14), upon presenting each price (16), recording the brain activity using multichannel EEG and use such data to determine the time-locked brain response elicited in the subject (12) by the price (16), and inferring from the time-locked responses to all tested prices the willingness-to-pay (18) and a prediction of the demand curve.

2. Method (10) according to Claim 1,
**characterized in**,
for each price (16), determine the time-locked brain response to both the words "cheap" and "expensive" ,
and inferring the willingness-to-pay (18) and a prediction of the demand curve from the word-induced time-locked brain responses.

3. Method (10) according to Claim 1 or Claim 2,
**characterized in**,
for each price (16), measuring the time elapsed between the presentation of the word and the answer (12), and
inferring the willingness-to-pay from the analysis of the reaction times to each tested price

4. Method (10) according to any of the preceding claims,
**characterized in that**,
to record time-locked brain responses to each tested prices. The brain responses are captured by a multichannel electroencephalograph at a sampling rate of 1024 Hz.

5. Method (10) according to any of the preceding claims,
**characterized in**
periodically presenting the subject (12) with the commodity or service (14) prior to presenting the subject (12) with one of the prices (16).

6. Method (10) according to any of the preceding claims,
**characterized in that**
the subject (12) is presented with the prices (16) in a randomized order wherein each price (16) occurs several times.

7. Method (10) according to any of the preceding claims,
**characterized in**
inferring, from the willingness-to-pay (18) the demand for the tested commodity or service (14).

8. Method (10) according to Claim 7,
**characterized in**
inferring, from the willingness-to-pay (18), a price (16) elasticity of the demand for the tested commodity or service.
